# EUROPÄISCHE PATENTANMELDUNG

(11) **EP 0 994 624 A2**
(43) Veröffentlichungstag der Anmeldung: **19.04.2000**
(21) Anmeldenummer: 99440215.4
(22) Anmeldetag: 29.07.1999
(51) Int. Cl.: H04N 7/14

(54) **Verfahren zur erweiterten Nutzung eines Bildtelefons**

(30) Priorität: 28.08.1998 DE 19839157
(71) Anmelder: ALCATEL, 75008 Paris (FR)
(72) Erfinder: Hägebarth, Frank, 74366 Kirchheim (DE)
(74) Vertreter: Brose, Gerhard, Dipl.-Ing.

(57) **Zusammenfassung**

Die Erfindung betrifft ein Verfahren zur erweiterten Nutzung eines Bildtelefons (5) mit einem ersten Kanal (7) zur Tonübertragung und einem zweiten Kanal (8) zur Bildübertragung, wobei mindestens ein A-Teilnehmer (Anrufer) oder ein B-Teilnehmer (Angerufener) über ein derartiges Bildtelefon (5) verfügt. Um den kommerziellen Nutzen von Bildtelefonen bei gleichzeitiger Attraktivitätssteigergung für den Anwender zu erhöhen, ist vorgesehen, daß während des Verbindungsaufbaus und/oder während der Aufrechterhaltung der Verbindung zwischen den Teilnehmern in den ersten (7) und oder den zweiten Kanal (8) Ton- und/oder Bildinformationen, insbesondere Werbung, zur Wiedergabe durch das Bildtelefon (5) eingespeist werden, sofern der entsprechende Kanal (7, 8) nicht für den Verbindungsaufbau oder die Aufrechterhaltung der Verbindung belegt ist.

## Beschreibung

Die Erfindung betrifft ein Verfahren zur erweiterten Nutzung eines Bildtelefons gemäß dem Oberbegriff des Anspruchs 1, ein System zur Durchführung des Verfahrens sowie einen Info-Server.

Die technischen Voraussetzungen zur Einführung von Bildtelefonen wurden bereits vor einiger Zeit geschaffen. Dennoch ist der Verbreitungsgrad bisher äußerst gering. Die wenigsten Teilnehmer sind als Bildtelefon-Teilnehmer erreichbar. Bildtelefonie ist daher gerade in der Einführungsphase sowohl für den, vorwiegend privaten, Anwender als auch kommerziell wenig interessant.

Der Erfindung liegt die Aufgabe zugrunde, die Vermarktungsfähigkeit der Bildtelefonie entscheidend zu verbessern. Einerseits ist ein Kaufanreiz für den Anwender und andererseits ein kommerzieller Nutzen für den Anbieter anzustreben.

Erfindungsgemäß wird die Aufgabe durch die kennzeichnenden Merkmale des Anspruchs 1 gelöst. Durch die Nutzung des Bildtelefons als Werbeträger ergeben sich Vorteile für den Anwender, den Netzbetreiber beziehungsweise Service-Provider, den Hersteller von Bildtelefonen und die werbende Industrie.

Der Netzbetreiber oder Service-Provider, der gemäß Anspruch 2 die Ton-und/oder Bildinformationen mittels eines Info-Servers bereitstellt, erzielt Werbeeinnahmen, die genutzt werden können, um Bildtelefone an Kunden im eignen Netz kostengünstig zu verkaufen oder zu vermieten. Dem Telefonkunden steht somit ein preiswerter Bildtelefondienst zur Verfügung. Außerdem können Informationen aller Art empfangen werden. Auf diese Weise findet das Bildtelefon eine schnellere Verbreitung, wobei in der Einführungsphase, in welcher mit den Geräten überwiegend normale Telefongespräche - ohne Bild - geführt werden, der prozentuale Werbeanteil am größten ist.

Besondere Kundenakzeptanz ist durch die Merkmale des Anspruchs 3 erreichbar. Der Anwender kann an seinem Bildtelefon aus einer Anzahl verschiedener angebotener Programme ein ihn interessierendes Programm auswählen. Insbesondere bietet jedes Programm Informationen beziehungsweise Werbung zu einem bestimmten Themenbereich.

Die Einschaltung des Info-Servers kann gemäß Anspruch 4 über eine Vermittlungsstelle erfolgen. Die Vermittlungsstelle erkennt und identifiziert einen freien Kanal eines Anrufers oder eines Angerufenen und meldet dieses an den Infor-Server, welcher daraufhin ein Programm in den freien Kanal einspeist. Der Teilnehmer kann folglich, solange er an seinem Bildtelefon hantiert, aber gerade kein Gespräch führt, Bild- und Toninformationen empfangen. Sobald der Verbindungsaufbau abgeschlossen ist und der andere Teilnehmer nicht über ein Bildtelefon verfügt, wird der Ton-Kanal für das Telefongespräch genutzt, während der Bild-Kanal weiterhin über den Info-Server mit Bildwerbung versorgt wird. Nur wenn beide Gesprächspartner ein Bildtelefon verwenden erfolgt keine Beaufschlagung durch den Infor-Server. Die eigentliche Funktion der beiden Kanäle, nämlich Ton und Bild zwischen mindestens zwei Gesprächsteilnehmern zu übertragen hat somit Vorrang und kann nicht durch Werbung oder dergleichen unterdrückt werden.

Anspruch 5 charakterisiert eine vorteilhafte Ausführungsform des Info-Servers. Um die Netzlast so gering wie möglich zu halten, sollte eine Anzahl von Info-Servern mit replizierten Inhalten im Netz verfügbar sein. Dadurch ist gewährleistet, daß jedes Bildtelefon über den nächstgelegenen Info-Server erreichbar ist.

Eine vorteilhafte Weiterbildung des Info-Serves nach Anspruch 5 ist durch die Merkmale des Anspruchs 6 gekennzeichnet. Der Zähler ermittelt die Anzahl der versendeten Infos einer speziellen Art. Insbesondere werden die speziellen Werbeblöcke oder Werbespots gezählt, um auf Grundlage dieser Summenzählung der werbenden Industrie einen Kostenanteil in Rechnung zu stellen. Der Netzbetreiber oder Service-Provider erzielt auf diese Art Werbeeinnahmen, welche an den Kunden weitergegeben werden können.

Die Erfindung wird nachfolgend anhand eines figürlich dargestellten Ausführungsbeispieles näher erläutert.

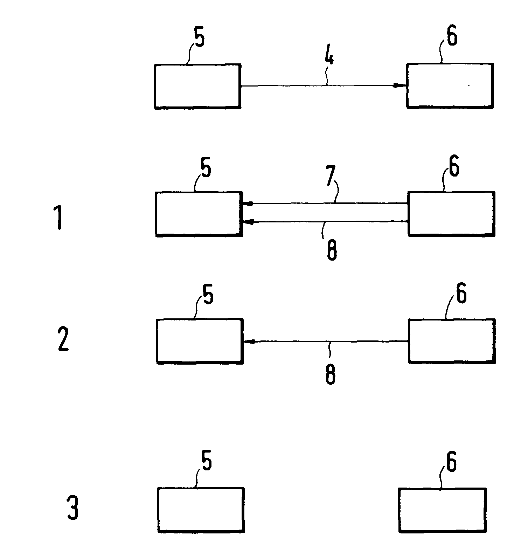

Die Figur zeigt einen schematischen Überblick über das vorgeschlagene Verfahren. Das beschreibene Beispiel bezieht sich auf ein ISDN-Bildtelefon. Es ist ersichtlich, daß drei Fälle 1 - 3 zu unterscheiden sind. Zum Verbindungsaufbau wird zunächst ein Datenpaket über einen D-Kanal 4 von einem Bildtelefon 5 an einen Info-Server 6 übertragen. Dieses Datenpaket enthält die Rufnummer und eine Kennung für das gewünschte Programm, welches durch den Info-Server 6 an das Bildtelefon 5 übermittelt werden soll. Die Kennung kann beispielsweise am Bildtelefon 5 voreingestellt sein. Denkbar wäre jedoch auch, daß der Info-Server 6 einen rufnummernspezifischen Speicher für das Wunschprogramm enthält. Sobald der Info-Server 6 aktiviert ist, wird das ausgewählte Programm über zwei B-Kanäle 7 und 8 an das Bildtelefon 5 übertragen. Ein B-Kanal 7 dient dabei der Tonübertragung während der andere B-Kanal 8 zur Bildübertragung vorgesehen ist.

Fall 2 veranschaulicht die Situation, in der der Verbindungsaufbau abgeschlossen ist und der zweite Teilnehmer - Anrufer oder Angerufener - nur den Tonkanal 7 belegt. Das ist dann der Fall, wenn dieser zweite Teilnehmer nicht über ein Bildtelefon verfügt oder dessen Bild-Kanal deaktiviert hat. Hierbei ist der Bild-Kanal 8 frei und kann somit für Bildübertragung vom Infor-Server 6 zum Bildtelefon 5 des ersten Teilnehmers genutzt werden. Der erste Teilnehmer empfängt folglich die - Sprachmitteilungen des zweiten Teilnehmers und die Bildinformationen des Info-Servers 6.

Bei Fall 3 ist der Verbindungsaufbau abgeschlossen und beide oder alle Gesprächsteilnehmer verwenden Bildtelefone 5. In diesem Fall sind beide Kanäle 7 und 8 belegt, so daß weder Bild- noch Tonübertragung durch den Info-Server möglich ist.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen.

## Patentansprüche

1. Verfahren zur erweiterten Nutzung eines Bildtelefons (5) mit einem ersten Kanal (7) zur Tonübertragung und einem zweiten Kanal (8) zur Bildübertragung, wobei mindestens ein A-Teilnehmer (Anrufer) oder ein B-Teilnehmer (Angerufener) über ein derartiges Bildtelefon (5) verfügt, dadurch gekennzeichnet, daß während des Verbindungsaufbaus und/oder während der Aufrechterhaltung der Verbindung zwischen den Teilnehmern in den ersten (7) und/oder den zweiten Kanal (8) Ton- und/oder Bildinformationen, insbesondere Werbung, zur Wiedergabe durch das Bildtelefon (5) eingespeist werden, sofern der entsprechende Kanal (7, 8) nicht für den Verbindungsaufbau oder die Aufrechterhaltung der Verbindung belegt ist.

2. System zur Durchführung des Verfahrens nach Anspruch 1, gekennzeichnet durch einen Info-Server (6) eines Netzbetreibers oder eines Service-Providers, der die Ton- und/oder Bildinformationen bereitstellt.

3. System nach Anspruch 2, gekennzeichnet durch
• einen Info-Server (6), der mehrere Programme, insbesondere teilnehmerspezifische Werbeprogramme, bereitstellt und
• Mittel zur Programmauswahl durch den Teilnehmer.

4. System nach Anspruch 2 oder 3 mit mindestens einer Vermittlungsstelle, dadurch gekennzeichnet, daß die Vermittlungsstelle
• erste Mittel zur Identifizierung mindestens eines nicht belegten Kanals (7, 8) des A- und/oder B-Teilnehmers und
• zweite Mittel zur Beaufschlagung des Info-Servers (6) aufweist, wobei die zweiten Mittel aktivierbar sind, wenn durch die ersten Mittel mindestens ein nicht belegter Kanal (7, 8) identifiziert wurde.

5. Info-Server (6) nach einem der Ansprüche 2 bis 4, gekennzeichnet durch
• Mittel zum Erkennen mindestens eines nicht belegten Kanals (7, 8) des A- und/oder B-Teilnehmers,
• Speichermittel für mindestens ein Programm mit mindestens einem Info-Block und
• Mittel zum Einspeisen des Info-Blocks in den nicht belegten Kanal (7, 8) des A- und/oder B-Teilnehmers.

6. Info-Server (6) nach Anspruch 5, gekennzeichnet durch einen Zähler zur Ermittlung der Anzahl von Einspeisungen eines jeden Info-Blocks.
